# EUROPEAN PATENT SPECIFICATION

(11) **EP 2 621 683 B1**
(45) Date of publication and mention of the grant of the patent: **25.02.2015**
(21) Application number: 11743455.5
(22) Date of filing: 29.06.2011
(51) Int. Cl.: B25F 5/00

(54) **PORTABLE ELECTRIC POWER TOOL WITH RADIO COMMUNICATION DEVICE**
TRAGBARES ELETKTROWERKZEUG MIT FUNKKOMMUNIKATIONSVORRICHTUNG
OUTIL ÉLECTRIQUE PORTATIF ÉQUIPÉ D'UN DISPOSITIF DE COMMUNICATION RADIO

(30) Priority: 30.09.2010 SE 1051017
(43) Date of publication of application: 07.08.2013
(73) Proprietor: Atlas Copco Industrial Technique AB, 105 23 Stockholm (SE)
(72) Inventor: WALLGREN, Carl JOHAN Erik, S-117 32 Stockholm (SE)
(74) Representative: Ekeberg, Lars Gunnar
(86) International application number: PCT/EP2011/060966
(87) International publication number: WO 2012/041547

(56) References cited:
- EP-A1- 1 852 760
- WO-A1-2007/058596
- WO-A1-2008/088266
- DE-A1-102008 040 061
- JP-A- 2008 213 069
- US-A- 6 104 162
- US-A1- 2004 070 369
- US-A1- 2005 280 393

## Description

The invention relates to a portable electric power tool including a housing with a connection terminal for connection of a voltage supply source, an electric motor, an onboard operation control unit and a radio communication device for communicating tool operation data and operation result data between the operation control unit and a stationary data processing unit.

The invention concerns battery as well as mains connected electric power tools, wherein the voltage supply source is disconnected from the tool from time to time such that the radio communication device and the operation control unit are temporarily left without any voltage supply.

In prior art electric power tools, for instance battery powered tools, there has been a problem related to an undesirable delay in reassuming the radio communication device operation and the start-up of tool operation from the instant the voltage supply, i.e. the power battery unit, is removed from the tool until another re-charged battery unit is connected to the tool and power voltage supply is restored. This is due to the fact that the radio communication device and the control unit require 10-15 seconds to start up the wireless communication with the stationary data processing unit to, thereby, enable start-up of the tool after a new battery unit has been connected and power voltage is again supplied. This delay in reassuming the power tool operation condition is considered to be too long in for instance assembly line applications as it will influence negatively on the productivity of the tool.

It is an object of the invention to improve the productivity of portable electric power tools having an onboard control unit and a radio communication device by reducing substantially the delay in radio communication between the tool and a stationary data processing unit and thereby the delay in reassuming the tool operation condition at disconnection of the voltage supply source.

It is a further object of the invention to provide portable electric power tools having an onboard control unit, and a radio communication device, wherein the delay in starting up the tool after battery unit exchange is substantially reduced by continuously keeping up a voltage supply to the operation control unit and the radio communication device at disconnection of the voltage supply source.

Still further objects and advantages of the invention will appear from the following specification and claims.

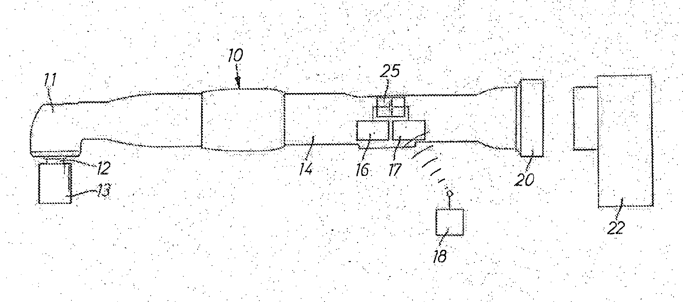

One embodiment of the invention is described below with references to the accompanying drawing.

In the drawing there is shown a power tool in the form of an electric angle wrench which comprises a housing 10 with an angle head 11, an output shaft 12 carrying a nut socket 13, and an electric motor 14. The tool further includes a schematically illustrated operation control unit 16 and a radio communication device 17 for communicating operation data as well as operation result data between the power tool and a stationary remotely located data processing unit 18. The housing 10 of the power wrench shown in the drawing is provided with a docking portion 20 for receiving a rechargeable battery unit 22. The latter is exchangeable with one or more identical battery units for enable recharging of the battery units after a service period.

In order to keep up continuously a voltage supply to the radio communication device 17 and the control unit 16 at disconnection of the battery unit 22 there is provided a back-up voltage accumulating device 25. This back-up voltage accumulating device 25 may be an auxiliary battery unit or any other type of voltage accumulating means available, for instance a condenser, a super CAP or any other similar device.

Although the power tool illustrated in drawing is powered by a battery unit the invention is as well related to electric mains connected tools, wherein the tool housing 10 instead of the battery docking portion 20 is provided with a non-illustrated connection device for a mains connected cable. Also in power tools having a stationary electric mains network as a voltage supply source it is essential for keeping up the productivity of the power tool to keep up continuously the voltage supply to the radio communication device 17 and the control unit 16 to thereby avoid delays in bringing the tool back into operation condition after a temporary disconnection of the voltage supply cable. Therefore, the back-up voltage accumulating device 25 is an essential part also in this non-illustrated embodiment of the invention.

Either the power tool according to the invention uses a battery unit or an electric mains as a voltage supply source the back-up voltage accumulating device 25 is arranged to supply voltage to the radio communication device 17 and control unit 16 during the time interval the voltage supply source is disconnected only, but to be recharged at reconnection of the voltage supply source. Thereby, the back-up voltage accumulating device 25 will always be fully charged to be able to keep up the voltage supply to the radio communication device 17 and the control unit 16 when the voltage supply source is disconnected next time. As stated above, the back-up voltage accumulating device 25 could be in the form an auxiliary battery unit and be arranged as a built-in component in the tool housing or as a detachable module easily exchangeable without dismantling the tool as required.

## Claims

1. Portable electric power tool, comprising a housing (10) with a connection terminal (20) for connection of a voltage supply source (22), an electric motor (14), an onboard operation control unit (16), and a radio communication device (17) for communicating operation data and operation result data between the power tool and a stationary data processing unit (18),
**characterized in that** a back-up voltage accumulating device (25) is provided onboard the power tool to keep up continuously a voltage supply to the operation control unit (16) and the radio communication device (17) at occurring disconnections of the voltage supply source (22), so as to reduce the delay for reassuming the operation condition of the tool after re-connection of the voltage supply source (22).

2. Power tool according to claim 1, wherein said back-up voltage accumulating device (25) is arranged to supply voltage as the voltage supply source (22) is disconnected only and to be recharged by the voltage supply source (22) as the latter is re-connected.

3. Power tool according to claim 1 or 2, wherein said voltage supply source (22) is a rechargeable battery unit, and said connection terminal (20) comprises a docking portion formed on the housing (10) and adapted to receive one of at least two exchangeable battery units (22).

4. Power tool according to anyone of claims 1-3, wherein said back-up voltage accumulating device (25) comprises an auxiliary battery unit detachably mounted on the housing (10).

5. Power tool according to claim 1 or 2, wherein said voltage supply source is an electric mains system connected to the power tool via a cable, and said connection terminal is a cable connecting device.

## Patentansprüche

1. Tragbares Elektrowerkzeug, das ein Gehäuse (10) mit einer Anschlussklemme (20) zum Anschluss einer Spannungsquelle (22), einen Elektromotor (14), eine integrierte Steuereinheit (16) und eine Funkkommunikationsvorrichtung (17) zur Übermittlung von Arbeitsvorgangs- und Arbeitsergebnisdaten zwischen dem Elektrowerkzeug und einer stationären Datenverarbeitungseinheit (18) umfasst,
**dadurch gekennzeichnet, dass** zur kontinuierlichen Aufrechterhaltung einer Spannungsversorgung der Steuereinheit (16) und der Funkkommunikationsvorrichtung (17), falls eine Trennung von der Spannungsquelle (22) vorliegt, im Elektrowerkzeug eine Reserve-Spannungsspeichervorrichtung (25) integriert ist, so dass die Zeitdauer bis zum Wiedererreichen des Betriebszustands des Werkzeugs nach der Wiederverbindung mit der Spannungsquelle (22) verkürzt wird.

2. Elektrowerkzeug nach Anspruch 1, wobei die besagte Reserve-Spannungsspeichervorrichtung (25) so angeordnet ist, dass sie nur die Spannungsversorgung übernimmt, wenn eine Trennung von der Spannungsquelle (22) besteht, und dass sie durch die Spannungsquelle (22) erneut aufgeladen wird, wenn diese wieder verbunden ist.

3. Elektrowerkzeug nach Anspruch 1 oder 2, wobei die besagte Spannungsquelle (22) eine Akkumulatoreinheit ist und die besagte Anschlussklemme (20) einen am Gehäuse (10) ausgebildeten Andockabschnitt umfasst, der zur Aufnahme einer von wenigstens zwei austauschbaren Batterieeinheiten (22) eingerichtet ist.

4. Elektrowerkzeug nach einem der Ansprüche 1-3, wobei die besagte Reserve-Spannungsspeichervorrichtung (25) eine Hilfsbatterieeinheit umfasst, die abnehmbar am Gehäuse (10) montiert ist.

5. Elektrowerkzeug nach Anspruch 1 oder 2, wobei die besagte Spannungsquelle ein elektrisches Netz ist, das mit dem Elektrowerkzeug über ein Kabel verbunden ist, und die besagte Anschlussklemme eine Kabelanschlussvorrichtung ist.

## Revendications

1. Outil électrique portatif, comprenant un boîtier (10) avec une borne de connexion (20) pour la connexion d'une source d'alimentation en tension (22), un moteur électrique (14), une unité de commande d'opération embarqué (16), et un dispositif de communication radio (17) pour communiquer des données d'opération et des données de résultat d'opération entre l'outil électrique et une unité de traitement de données stationnaire (18),
**caractérisé par le fait qu'**un dispositif d'accumulation de tension de secours (25) est disposé embarqué sur l'outil électrique pour maintenir une alimentation en tension de manière continue sur l'unité de commande d'opération (16) et le dispositif de communication radio (17) lors de la survenue de déconnexions de la source d'alimentation en tension (22), afin de réduire le retard pour reprendre la condition d'opération de l'outil après reconnexion de la source d'alimentation en tension (22).

2. Outil électrique selon la revendication 1, dans lequel ledit dispositif d'accumulation de tension de secours (25) est conçu pour alimenter une tension lorsque la source d'alimentation en tension (22) est déconnectée seulement et pour être rechargé par la source d'alimentation en tension (22) lorsque cette dernière est reconnectée.

3. Outil électrique selon la revendication 1 ou la revendication 2, dans lequel ladite source d'alimentation en tension (22) est une unité de batterie rechargeable, et ladite borne de connexion (20) comprend une partie d'accueil formée sur le boîtier (10) et conçue pour recevoir une d'au moins deux unités de batterie échangeables (22).

4. Outil électrique selon l'une quelconque des revendications 1 à 3, dans lequel ledit dispositif d'accumulation de tension de secours (25) comprend une unité de batterie auxiliaire montée de manière détachable sur le boîtier (10).

5. Outil électrique selon la revendication 1 ou la revendication 2, dans lequel ladite source d'alimentation en tension est un système de réseau électrique connecté à l'outil électrique par l'intermédiaire d'un câble, et ladite borne de connexion est un dispositif de connexion par câble.
